# EUROPEAN PATENT APPLICATION

(11) **EP 0 608 098 A1**
(43) Date of publication of application: **27.07.1994**
(21) Application number: 94300333.5
(22) Date of filing: 18.01.1994
(51) Int. Cl.: C22B 17/02, C22B 7/00

(54) **Process for the recovery of nickel and/or cadmium and apparatus therefor**

(30) Priority: 19.01.1993 US 5705
(71) Applicant: EVEREADY BATTERY COMPANY, INC., St. Louis Missouri 63164 (US)
(72) Inventor: DeLisle, Ralph J., Gainesville, Florida 32606 (US); Martin, Harold E., Gainesville, Florida 32601 (US); Wilkerson, Amos, Alachua, Florida 32615 (US)
(74) Representative: Harrison, Susan Joan

(57) **Abstract**

A process and device for recovering cadmium and nickel metals from nickel-cadmium battery and processing scrap material containing nickel, cadmium, iron and other substances, which includes heating the material in a furnace and separating off and collecting the desired products.

## Description

The present invention relates to a process for the recovery of nickel and/or cadmium from material containing the same as well as to apparatus for such recovery. More particularly the present invention relates to the recycling of nickel-cadmium batteries, especially to the recovery of metals from nickel cadmium battery scrap, unused nickel cadmium electrode materials, nickel cadmium battery process residues and the like. Specifically, the present invention relates to a simplified pyrometallurgical recovery process and device for recovering cadmium and nickel metal from scrap material containing the same.

Nonrechargeable, primary alkaline cells have been a principal power source for portable battery power in many devices, such as flashlights, tape recorders, calculators, radios and the like, for many years. Unfortunately, however, the environmental problems involved with the disposal of such batteries have made these cells less desirable and have provided a major impetus for the development of so-called secondary cells which are rechargeable. At this stage in the development a typical rechargeable cell arrangement includes cells employing the metals cadmium and nickel. These rechargeable cells, however, also wear out eventually and must also be disposed of. Additional environmental concerns are thus encountered, particularly influenced by the presence of the cadmium in these cells.

Such electrical storage batteries even when they are spent and can no longer provide power contain metals whose recovery may be advantageous both from a financial point of view and from an environmental position. The metals, as previously indicated, which are principally of interest for recovery are cadmium and nickel. There is a significant additional environmental interest in preventing cadmium from being released into the environment by arbitrary and indiscriminate scrapping or throwing away of batteries in landfills and the like. It is therefore apparant from the view point of both the consumer and the manufacturer of such cells that there is a significant desire to ensure that used and scrapped nickel cadmium batteries are disposed of in a controlled and safe manner.

It is not only the spent cells themselves which contain potentially reusable nickel and cadmium; these metals are also contained in the various process residues resulting from the manufacture of such cells. These residues also contain cobalt, other metals and oxides, hydroxides, hydrates and other compounds, the re-cycling and re-use of which could be of interest to manufacturers.

Certain processes for the recovery of cadmium and other metals from materials containing these metals are known. Chemical techniques for this recovery are, for example, described in U.S. Patent No. 4,511,541. U.S. Patent No. 4,793,933 describes a process for the extraction of metals from waste treatment sludges, the process utilising both heat and chemical processing techniques.

Further prior art includes U.S. Patent Nos. 4,401,463 and No. 4,675,048, both of which describe processes for recovering metals, and in particular nickel and cadmium, from electric storage batteries, the processes utilising electrothermal processes. However, the processes described in these patents are somewhat complex and require numerous processing stages and steps, requiring in turn a wide variety of equipment interaction. In particular, U.S. Patent No. 4,401,463 requires, by way of example, the transfer of the materials involved in the process to a variety of different locations for each of a variety of different steps.

It is apparent from a perusal of the prior art that the techniques currently available for the recovery of metals from, for example, scrap nickel-cadmium batteries and process residues are both complicated and costly. Consequently, in order to satisfy both the consumer's demand for protection of the environment and the manufacturer's demand for the recycling and re-use of valuable materials, there is still a need for a simple yet effective process and technique for the recovery of cadmium and nickel metals from materials containing the same.

In particular, there remains a need fora process and apparatus to enable the recycling of nickel-cadmium batteries, the recovery of cadmium and nickel metal from spent nickel-cadmium batteries as well as process residues and unused electroplate materials.

The present invention overcomes the problems associated with prior art techniques for the recovery of cadmium and/or nickel from materials containing the same and provides a novel process and apparatus for this purpose.

Accordingly, the present invention provides, in a first aspect, a pyrometallurgical process for the recovery of cadmium and/or nickel from material containing the same, which process comprises:
(i) treating material containing nickel and/or cadmium in a furnace with a material capable of absorbing oxygen and with a reducing gas;
(ii) heating the furnace to a temperature sufficient to vaporise water, non-metallic substances and cadmium, the temperature being so chosen as to prevent liquifaction of any remaining material;
(iii) condensing and solidifying the cadmium vapour; and
(iv) recovering solidified cadmium and/or nickel-base residue from the furnace.

In a particular embodiment of this aspect of the invention, there is provided a process for recovering cadmium and nickel metals from nickelcadmium battery and processing scrap material containing nickel, cadmium, and other substances, said process comprising the steps of:
depositing said scrap material in a furnace;
adding an effective amount of an oxygen getter in said furnace to inhibit oxide formation;
introducing and maintaining a reducing gas into the atmosphere of said furnace;
heating said furnace for an effective period of time to evapourate free water;
increasing and maintaining the temperature of said furnace to approximately 500°-800°C for an effective period of time to vaporise molecular water and non-metallic substances;
raising the temperature of said furnace to more than approximately 900 °C for an effective period of time to vapourize cadmium from said scrap material without liquifying the remaining scrap material;
directing said vapourized cadmium to a chamber connected to said furnace;
condensing and solidifying said cadmium vapour disposed within said chamber by decreasing the temperature of said cadmium vapour within said chamber;
recovering said solidified cadmium from said chamber; and
recovering a nickel-based residue from inside said furnace.

In its second aspect, the present invention provides apparatus for the recovery of cadmium and/or nickel from material containing the same, including a furnace containing an internal chamber, the chamber having means for the introduction of material to be treated, gas inlet means and gas outlet means, and a condenser connected to the gas outlet means, the condenser containing a container for the collection of product, the apparatus further comprising means to control the temperature of the furnace and the condenser.

In a particular embodiment, this aspect of the invention provides a device for recovering cadmium and nickel metals from nickel-cadmium batteries and processing scrap material containing nickel, cadmium, iron and other
non-metallic substances, said device comprising;
a furnace defining an interior chamber and having material inlet means for inserting said scrap material therein, gas inlet means, and gas outlet means;
means for injecting and maintaining a reducing gas atmosphere into said furnace chamber through said gas inlet means;
means for providing an oxygen getter in said furnace chamber to overlay said scrap material therein to prevent oxide formation;
means for controlling the temperature of said furnace chamber in sequential fashion to selectively off-gas free waters then molecular water and non-metallic substances, and then cadmium vapour;
condenser means connected to said gas outlet means and including mould means for receiving condensed cadmium;
means for controlling the temperature of said condenser means to condense and then solidify into said mould means cadmium vapour received from said furnace chamber; and
means for receiving exhaust gas from said condenser means for filtering and collecting particulate ash therein.

The present invention may be further understood by reference to the accompanying drawings, in which:
Fig. 1 is a flow diagram illustrating the steps of the process of the present invention; and
Fig. 2 is a schematic of a device constructed in accordance with the present invention.

The pyrometallurgical metal recovery process of the present invention removes substantially all cadmium metal from material containing the same, particularly from nickel-cadmium cell scrap and from metallic hydroxide sludges, unused positive and negative electrode materials, process residues and the like.

In general, the process of the invention achieves cadmium metal recovery by vapourizing cadmium from the feedstock and condensing it from a vapour to a liquid then to a solid metal in a controlled atmon- sphere. The resultant cadmium product is as pure as that metal purchased from cadmium nitrate sources and meets all of the specifications for cadmium use and electrode manufacturing for nickel-cadmium batteries.

The overall waste products of the process of the invention include water, which is processed through a standard waste water treatment system and a bag- house dust, which is disposed of. Dry solids, which contain high levels of nickel, are also produced. The nickel-containing solids can be sold to, for example, metal refineries for nickel content.

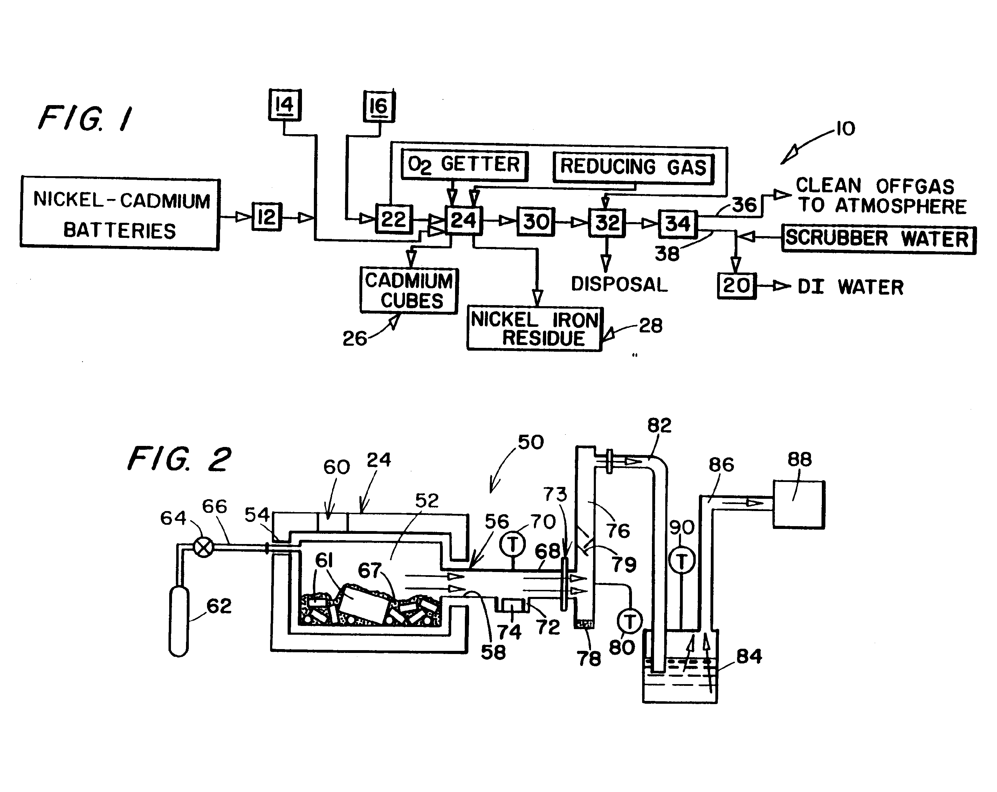

In the first aspect of this invention, a process is provided for the recovery of cadmium and/or nickel from material containing the same. Suitable materials include scrap materials containing these metals. Typically, the process of the present invention will be useful in the recovery of cadmium and/or nickel from nickel-cadmium batteries, metallic hydroxide sludges, unused positive and negative electrode materials and process residues, including filter cakes. Process residues generally include nitrates which have fallen away from electrode plates during the production of electroplate. Moreover, base metals or hydroxides can also be included in this process residue. Such process residues are generally de-watered (as indicated in Figure 1, hereinafter) before being introduced into the furnace, and are typically in the form of filter cakes containing approximately 80% water, but still being dry to the touch. This material forms the feedstock for the process of the invention and the process can be applied to one of these scrap materials or to a mixture thereof.

In the process of the present invention, it is preferred that the source material is provided in relatively small pieces. Thus, the original scrap material may be chopped or shredded using standard techniques.

The first stage of the process of the present invention involves the treatment of the feedstock with a material capable of absorbing oxygen and with a reducing gas. The oxygen absorber, or oxygen getter, is employed to prevent the formation of oxides within the furnace, and this material may be any such material which is capable of absorbing oxygen. The choice of material is not essential to the present invent ion provided that the material chosen will prevent the formation of oxides under the conditions used in the process of the present invention. We generally prefer to use a carbon containing material for this purpose, and we most prefer to use coke.

The precise amount of oxygen absorber or getter used in the process of the present invention is not essential, provided that there is sufficient of that material to prevent the formation of oxides during the process, and may be dependent on, for example, the amount and type of the feedstock. Although an excess of carbon can be used, we have found that when using excess carbon, the process utilises only 20% of the available carbon. Of course the remaining 80% is then available for re-cycling and re-use, for example within the process of the invention. Generally, we prefer to use from 28.35 to 56.7 g (1-2 ounces) of carbo per 4.5 Kg (10 pounds) of feedstock. Under certain conditions, however, we have found that it can be beneficial to use sufficient of the oxygen absorbing material to form a covering of or blanket overthe feedstock.

A reducing gas is also added to the furnace during the first stage of the process of the invention. The reducing gas also participates in the prevention of oxide formation by maintaining a reducing atmosphere in the furnace. The choice of reducing gas is not essential to the present invention, provided that the gas chosen will participate in the prevention of oxide formation and does not react significantly with components of the feedstock. We have found that nitrogen gas may be used, although this may react with components of the feedstock to form, for example NOₓ, cyanides, etc. We therefore prefer to use an inert reducing gas such as, for example, argon.

The precise amount of reducing gas used in the process of the present invention is not essential, provided that there is sufficient of that material to participate in the prevention of oxide formation during the process and to maintain the furnace in a reducing atmosphere. The furnace is typically flooded with the reducing gas and, under certain conditions, we have found that it can be beneficial to use sufficient of the reducing gas to form a covering of or blanket over the feedstock.

The next stage of the process of the present invention involves raising the temperature of the furnace so as to cause vaporisation of any water, non-metallic materials and cadmium. The temperatures chosen should be such that any remaining scrap material is not liquified. This vaporisation stage may take place as one step or as successive steps. We generally prefer that successive steps are used, first to evapourate free water, then to vaporise molecularwa- ter and non-metallic materials and finally to vaporise cadmium.

For the removal of free-water, any temperature which causes evaporation of free water may be used. Typically we prefer to heat the furnace to a temperature of from 150 to 350°C, more preferably from 200 to 300°C. The time for which the furnace is maintained at this temperature is not essential to the present invention, but should be sufficient to ensure total evaporation of free water. Generally, under the preferred temperature conditions outlined above, a time of from 1 to 2 hours is sufficient.

For the vaporisation of molecular water and non-metallic material, such as plastics, the temperature of the furnace will need to be raised. Any temperature may be used, so long as it results in the vaporisation of molecular water and non-metallic substances. We prefer that the temperature at this stage is not sufficiently high also to result in the vaporisation of cadmium. We have found that a temperature of from 450 to 850°C is sufficient, and preferably a temperature of from about 500 to 800° C. The time for which the furnace is maintained at this temperature is not essential to the present invention, but should be sufficient to ensure total vaporisation of molecular water and non-metallic substances. Generally, under the preferred temperature conditions outlined above, a time of from 1 to 2 hours is sufficient.

During the third stage of this part of the process, the cadmium is vaporised. The temperature within the furnace should thus be increased so as to ensure such vaporisation. The precise temperature chosen is not essential to the present invention, provided that it results in the vaporisation of all of the cadmium and does not allow the liquifaction of any remaining scrap material. We have found that a temperature of over 900°C, preferably of from about 900 to 1000°C, and most preferably of approximately 950°C is sufficient for this purpose. The time for which the furnace is maintained at this temperature may vary depending on, for example, the amount and the content of the feedstock. The time at which the furnace is maintained at this temperature should be sufficient to ensure total vaporisation of cadmium. Generally, under the preferred temperature conditions outlined above, a time of at least 2 hours is sufficient.

During the next stage of the process of the invention, the vaporised cadmium is solidified to enable its removal. Although such solidification may take place in the furnace directly, we prefer that the cadmium vapour is directed towards a separate chamber for solidification. Use of such a separate chamber allows, for example, the independent control of temperatures. We most prefer that the cadmium vapour is directed towards a condenser which may be, for example, connected to the furnace by way of an outlet. Suitably at least one mould or container is housed within the condenser for retention of the solidified cadmium.

The chamber in which the cadmium solidifies, for example the condenser, is maintained at a temperature lower than that of the furnace during vaporisation of the cadmium. Although this may be done using any standard techniques, we prefer to use a thermocouple to monitor the temperature of this chamber. This temperature is controlled so as to allow for the cadmium gas to cool and form a liquid in the mould orcon- tainer and then for the liquid to solidify. During formation of the liquid, the temperature is suitably maintained at from 300 to 400°C, preferably at about 300 to 320°C at the mould in order to maintain the cadmium in liquid form so that any ash contaminants will rise to the top of the liquid cadmium. When it is desired to solidify the cadmium the temperature is slowly reduced to, for example, from 135 to 200°C so as to enable solidification but to prevent the formation of cadmium dust. Cadmium produced by the above process is, typically, approximately 99.998% pure.

As the cadmium condenses, any remaining exhaust gas is suitably cooled and removed from the system. Typically, this gas will be directed towards, for example, an ash collector which may take the form of a cyclone or other particulate filtration and collection device. Ash and particulate plastics materials may thus be collected and disposed of.

As a result of the process of the present invention, cadmium will be collected in the mould or container in the condensing chamber, ash and particulate plastics material will be collected in the device for that purpose and remaining gases will be condensed, treated and either disposed of or used once again. Remaining in the furnace at the end of the process will be a nickel-containing material, for example a nickel-iron mass, when a nickel-containing material was use as the feedstock This typically contains approximately 35% nickel and may then be used in battery manufacture or further refined to isolate nickel from the product.

Referring now to Fig. 1, unused as well as spent nickel-cadmium batteries are suitably shredded utilising any known shredding technique in order to reduce the batteries to a smaller, more manageable size. The shredding occurs at step 12 of the overall process 10. In addition, plain nickel cadmium electrodes 14, which have been unused in the processing of the batteries, as well as nickel-cadmium battery manufacturing process residues 16, which can include filter cakes as described above, form the feedstock and are all placed inside the chamber 52 of a retort furnace 24. The manufacturing process residues 16, however, are first dried by directing them to a dryer 22 and then to the retort furnace 24. Any standard retort furnace with variable temperature control capability arrangements can be utilised with the process and device of the present invention.

Once the feedstock has been placed within the furnace 24 the feedstock is exposed to any known oxygen absorber (oxyen getter) material, which is preferably carbon in the form of coke. Sufficient oxygen absorber material is included in the furnace 24 in order to ensure that oxide formation does not occur. In one form of the invention, a blanket of carbon is used to cover the entire feedstock. In furtherance of this purpose of preventing oxide formation, the furnace 24 is flooded with a reducing gas so that the atmosphere of the furnace 24 is maintained in a reduction atmosphere. Preferably, the reducing gas is in the form of an argon blanket. The furnace 24 is then operated at several heating levels as described below, after which solidified cadmium cubes are generated at 26 as well as producing a nickeliron residue 28.

The nickel-iron residue is cadmium free and will pass the Toxic Characteristic Leaching Procedure (TCLP) test as set forth by the Environmental Protection Agency. The cadmium cubes or blocks produced at 26 are of sufficient quality so as to be reusable directly in the nickelcadmium battery manufacturing process without further refinement or treatment.

The exhaust gas from the furnace 24 may be directed through a particulate separator 30 which separates the particular matter in a collector 32. Any ash and particulate matter is separated and collected in the collector 32 and then disposed of appropriately. The separator 30 and collector 32 may be separate units or one single unit, depending on individual choice. The remaining exhaust gas is then directed through a water scrubbing device 34 which results in two effluent streams, one clean stream 36,which is vented to the atmosphere, and a scrubber water 38 which is directed to a standard waste water treatment plant 20 and is then discarded.

After addition of the feedstock to the furnace 24, after add it ion of the oxygen absorber material and after the atmosphere of the furnace has been flooded with argon so as to create a total reducing atmosphere, the temperature of the furnace is suitably increased, for example to a temperature of approximately 200 to 300°C. This temperature is maintained for a period of time sufficient to vaporise and remove free water from the furnace 24. This vapour is then directed to the separator 30. In a preferred embodiment, the first temperature utilised for the furnace 24 in the present invention is approximately 250°-300°C and this is maintained for at least 1-2 hours. Once the free water has been evaporated, the temperature of the furnace 24 is further elevated to a range of 500°-800°C and maintained at that level for a period of time sufficient to vaporise molecular hydrogen, so as to remove the oxygen therefrom, as well as to vaporise non-metallic substances, such as plastic and the like. The gases produced are then vented through the separator 30 as described above. In a preferred embodiment, a temperature of about 500°-800°C is maintained for at least 1-2 hours in order to ensure complete vaporisation of the molecular water and non-metallic substances.

At this point, the temperature of the furnace 24 is then further increased to a range of at least 900°C, preferably about 900°-1,000°C, and more preferably at least 950°C, for a period of time sufficient to vaporise all of the cadmium present in the feedstock within the furnace 24. In a more preferred form, a temperature of least 950°C is used and this is maintained for at least two hours in order to fully vaporise all of the cadmium in the furnace 24, although the time period will vary depending on the amount and makeup of the feedstock.

The cadmium which has been vaporised or rendered volatile is then directed to a throat portion of the retort furnace 24 and to a condensing chamber or tube. The cadmium is then condensed into moulds contained within the chamber by reducing the temperature thereof of the mould and/or chamber in the region of the mould, preferably from about 400°C to approximately 135°-200°C. The cadmium will pass from a gaseous stage to a liquid stage within the moulds and then to a solid stage to form the cadmium cubes 26 referred to previously. The temperature is typically reduced to about 320°C at the mould point in order to maintain the cadmium in liquid form. This means that any ash contaminants present will rise to the top of the liquid cadmium. The temperature is eventually reduced to about 135°-200°C when it is desired to solidify the liquid cadmium. Reducing the temperature in the condensing chamber 30 too fast will result in the formation of cadmium dust, which is not desirable. Once the cadmium cubes 26 are formed, they are removed from the moulds. The nickel-iron residue is also recovered from the retort furnace 24.

Referring now to Fig. 2, a device 50 is described for achieving the generation of cadmium and a cadmium-free nickel-iron residue. Referring to Fig. 2, the furnace 24 includes an interior chamber 52 which has a gas input port 54 and a gas output port 56 having a throat portion 58. An input area 60 is provided in order to enable feedstock 61 of the type as previously described to be inserted within the chamber 52. Areduc- ing gas source 62 is provided and is preferably in the form of an argon gas tank. A metering valve 64 is provided along the tubing 66 which interconnects the argon gas source 62 with the gas inlet port 54. The metering valve 64 permits metering of the argon gas from the tank 62 into the chamber 52 in order to provide and maintain a reducing gas atmosphere within the chamber 52 at all times.

Once the feedstock 61 is inserted into the chamber 52 via the input opening 60, an oxygen absorber 67, as described above, is then introduced through the input opening 60. ln one embodimentofthe invention, the absorber material 67 covers the feedstock 61 in its entirety. However, it is preferred that approximately 28.35 to 56.7 g (1-2 ounces) of carbon are added for every 4.5 Kg (10 pounds) of feedstock material 61 within the chamber 52. It should be noted, however, that an excess of carbon results only in use of approximately 20% of the carbon, with 80% of the carbon being available for recycling and reuse within the process of the invention. If a large amount of filter cake is used as the feedstock 61, then an excess amount of carbon particles 67 is not desirable since separation between the two for reuse of the carbon can be difficult.

Once the feedstock 61, carbon 67 and argon gas are introduced into the chamber 52, the furnace 24 is operated as previously described with respect to the several temperature ranges. The gases produced are directed through the throat 58 into the condensing chamber 68 and then through the rest of the system. When the furnace 24 reaches its third heating stage, as described above, wherein cadmium vapour is produced, the cadmium vapour is directed through the throat 58 into the condensing chamber 68, which is preferably in the form of an integral tube. A thermocouple 70 monitors and maintains the temperature of the condensing chamber 68 at the desired level. When the cadmium vapour is introduced into the chamber 68, the temperature is maintained at about 400°C. The temperature is then dropped along the length of the tube 68 to about 300°-320°C at the mould tray 72 to about 135°-200°C at condenser outlet 73. Cadmium is condensed within the tube 68 and accumulates in a mould tray 72 to form cadmium cubes or blocks 74. The condensation of the cadmium vapour within the condensing chamber 68 is achieved by reducing the temperature across the length thereof as described above.

As the cadmium is condensed within the mould trays 72, the remaining exhaust gas is directed into an ash collector 76. The ash collector 76 may be in the form of a cyclone or any other type of well known particulate filtration and collection device, so as to accumulate plastic particulate materials, ash particulates and the like at the bottom 78 of the collector 76. In a preferred embodiment, the separator or collector 76 is a velocity reduction stack having baffles 79 therein for impeding the flow of the exhaust gas therethrough. As this occurs, the velocity of the gas is reduced, and this reduces its temperature. In so doing, the ash 78 falls out and collects at the bottom. The temperature of the collector may be monitored and regulated, for example, by a thermocouple 80.

The remaining exhaust gas may then be directed through piping 82 into any standard exhaust gas cooling device 84 and then through piping 86 into an air handling system 88, examples of which are well known in the art and will not be further described herein. The temperature of the exhaust gas cooling device 84 may be monitored and maintained, for example, by a thermocouple 90. The exhaust gas cooling device 84 may be any standard water bath device known to the art.

As previously discussed, the carbon or coke 67 that is introduced into the chamber 52 is preferably evenly distributed over the scrap material mass 61 placed therewithin. This is so that any oxygen generated therefrom is immediately bound up in the form of carbon monoxide and/or carbon dioxide so as to prevent the formation of other oxides within the chamber 52. The argon gas, of course, also assists in preventing oxidation reactions from occurring by providing a reducing atmosphere within the chamber 52.

Once the entire process as described above has taken place, charred nickel-iron material remains within the chamber 52. All plastic, cadmium and other metals and non-metallic materials have been removed by the process of the invention, and the result is a mass of nickel-iron material containing approximately 35% nickel.

A significant advantage of the present invention is that the furnace chamber 52 and condenser 68 are preferably a one-piece, integral unit requiring no moving parts for operation. In fact, the entire device 50 is without moving parts and requires no additional secondary operations. Thus, the device and method of the invention are very simple, economic yet incredibly effective in recovering cadmium metal and nickel-iron metal ore. Moreover, while a batch process is illustrated herein, a continuous process is also envisaged.

### EXAMPLE

To begin the process, battery cells and cell parts were reduced in size and opened to expose cell contents by shredding and chopping 36.29 Kg (80 pounds) of prepared cells and cell parts were placed in the retort, and 0.7 Kg (1% pounds) of carbon granules were also added. The retort was then closed and connected to the other process devices such as argon supply tube, ash collector, exhaust gas cooling chamber, and temperature sensing devices. The system was then started by turning on the regulated heat source to the oven which supplies thermal energy to the retort and its contents.

The pyrometallurgical process was performed in three distinct thermal cycles. The first thermal cycle removed free water and other moisture from the feedstock in the retort. The second cycle removed molec- ularwater, oxygen and othervolatile substances. The third cycle vaporised the cadmium so that it condensed as pure metal in the condenser chamber. During the three thermal cycles, process gases such as vapours, argon, carbon-oxygen, and other volatile materials passed from the retort through the condenser and ash collector into and through the exhaust gas cooling chamber and thereafter through the air handling equipment. The first thermal cycle period was approximately 1.5-2.0 hours at a temperature range of 200°C-300°C. The second thermal cycle period was then run for approximately 2-2.5 hours at a graduated temperature range of 500°-700°C. The third thermal cycle period was then operated for approximately 2.5-3.5 hours at a temperature range of 900°-1100°C. During this cycle, the temperature of the exhaust stream exiting the condenser was controlled to a temperature range of 150°-250°C.

At the end of the third heating cycle, the argon gas, thermal energy and exhaust gas cooling water supplies were stopped. The retort was permitted to cool to safe operating and handling temperatures whereupon the pure cadmium blocks and nickel-iron residue were removed and passed over to other battery manufacturing processes or to other purposes. The cadmium blocks removed from the condenser weighed approximately 4.95 Kg (11 pounds). The cadmium was roughly 99.9998% pure. The nickel-iron by-product weighed approximately 22.68 Kg (50 pounds), of which approximately 11.11 Kg (24.5 pounds) was nickel. The waste generated was water and ash weighing approximately 8.6 Kg (19 pounds), of which one to three percent was ash. Altogether this process required roughly eight hours.

The cadmium generated by this process was pure enough to be used in battery manufacturing or other purposes. The nickel generated was mixed or alloyed with other metals such as iron or cobalt. The nickel-iron by-product passed the toxic leachate characteristic process (TLCP) tests. The nickel-iron may be used in battery manufacturing or further refined to isolate nickel from the by-product.

As can be seen from the above, the pyrometallurgical metal recovery device and process of the present invention provide a technique for effectively recovering cadmium and nickel metals from scrap materials containing those metals as well as other residual metal and non-metal substances. The present invention provides cadmium-metal recovery of sufficient quality and purity that the cadmium metal may be immediately reused in nickel-cadmium battery manufacturing processes. Moreover, the residual nickel-iron residue is of sufficient quality that it can be sold to metal refineries for its nickel content or may be melted down for further processing. As a result of the present invention, the environmental impact of nickel-cadmium secondary cells is significantly reduced by removing the cadmium and nickel metals from any materials which need to be discarded. Since cadmium disposal is of particular environmental concern, the recovery of the cadmium metal significantly improves the recyclability of the nickelcadmium secondary batteries. Moreover, sufficient cadmium can be regenerated from spent cells and discarded process materials so as to provide substantially all of the cadmium requirements for the production of new nickel-cadmium batteries, thereby reducing environmental impact required from the generation of new raw cadmium material. Thus, as a result of the generation of in-house cadmium sources as well as the income derived from the sale of nickel-iron residue, the present invention provides significant costs savings as well as the elimination of significant environmental problems.

## Claims

1. A pyrometallurgical process for the recovery of cadmium and/or nickel from material containing the same, which process comprises:
(i) treating material containing nickel and/or cadmium in a furnace with a material capable of absorbing oxygen and with a reducing gas;
(ii) heating the furnace to a temperature sufficient to vaporise water, non-metallic substances and cadmium, the temperature being so chosen as to prevent liquifaction of any remaining material;
(iii) condensing and solidifying the cadmium vapour; and
(iv) recovering solidified cadmium and/or nickel-base residue from the furnace.

2. The process of Claim 1, wherein the oxygen absorber comprises carbon.

3. The process of Claim 2, wherein the oxygen absorber is in the form of coke.

4. The process of Claim 3, wherein the amount of coke used comprises approximately 28.35 to 56.7g (1-2 ounces) per 4.5 Kg (10 pounds) of the cadmium and/or nickel containing material to be treated.

5. The process of Claim 4, wherein 80% or less of the coke is reusable in subsequent process steps.

6. The process of any of the preceding Claims, wherein the reducing gas comprises argon.

7. The process of any of the preceding Claims, wherein the cadmium and/or nickel containing material to be treated is selected from spent or scrap nickel-cadmium batteries, unused electrode materials for nickelcadmium batteries, nickel-cadmium process residues, metallic hydroxide sludges, and mixtures thereof.

8. The process of any of the preceding Claims, wherein the water, non-metallic substances and cadmium are vaporised in three separate stages

9. The process of Claim 8, in which free water is vaporised by raising the temperature of the furnace to about 200°-300°C.

10. The process of Claim 8, in which molecular water and non-metallic substances are vaporised by raising the temperature of the furnace to about 500°-800°C.

11. The process of Claim 9 or 10 wherein said temperatures are maintained for a period of at least one-two hours each.

12. The process of Claim 8, in which the cadmium is vaporised by raising the temperature of the furnace to about 900-1000°C.

13. The process of Claim 12, wherein the temperature is about 950°C.

14. The process of Claim 12 or 13 wherein the temperature is maintained for at least two hours.

15. The process of any of the preceding Claims, wherein any residual gas remaining after condensation and solidification of the cadmium vapour is directed through ash collection means, adapted to separate and collect residual particles, and is then cooled and disposed of.

16. A process for recovering cadmium and nickel metals from nicke;- cadmium battery and processing scrap material containing nickel, cadmium and other substances, said process comprising the steps of:
depositing said scrap material in a furnace;
adding an effective amount of an oxygen getter in said furnace to inhibit oxide formation;
introducing and maintaining a reducing gas into the atmosphere of said furnace;
heating said furnace for an effective period of time to evaporate free water;
increasing and maintaining the temperature of said furnace to approximately 500°-800°C for an effective period of time to vaporise molecular water and non-metallic substances;
raising the temperature of said furnace to more than approximately 900 °C for an effective period of time to vapourize cadmium from said scrap material without liquifying the remaining scrap material;
directing said vapourized cadmium to a chamber connected to said furnace;
condensing and solidifying said cadmium vapour disposed within said chamber by decreasing the temperature of said cadmium vapourwith- in said chamber;
recovering said solidified cadmium from said chamber; and
recovering a nickel-based residue from inside said furnace.

17. A pyrometallurgical process for the recovery of cadmium and nickel metals in a retort furnace from scrap material including spent or scrap nickel-cadmium battery cells, unused positive or negative electrode materials, nickel-cadmium process residues, and filter cakes, said scrap materials containing nickel, cadmium, iron, cobalt and other non-metallic substances, said process comprising the steps of:
depositing said scrap material in said retort furnace;
maintaining a reducing gas atmosphere within said furnace;
adding a layer of carbon over said scrap material to prevent oxide formation;
heating said furnace to approximately 200°-300°C to evaporate free water,
increasing the temperature of said furnace to approximately 500°-800° C to vaporise molecular water and non-metallic substances;
elevating the temperature of said furnace to greater than 900°C to vapourize cadmium from said scrap material;
directing said vaporised cadmium to an integral condensing chamber containing a mould;
decreasing a temperature within said condensation chamber to condense said cadmium vapour into said mould and solidify the same therewithin;
directing exhaust gasses from said condensing chamber into an ash collector to recover residual particulates;
recovering the solidified residual cadmium; and
recovering a nickel-residue from said furnace.

18. Apparatus for the recovery of cadmium and/or nickel from material containing the same, including a furnace containing an internal chamber, the chamber having means for the introduction of material to be treated, gas inlet means and gas outlet means, and a condenser connected to the gas outlet means, the condenser containing a container for the collection of product, the apparatus further comprising means to control the temperature of the furnace and the condenser.

19. Apparatus for recovering cadmium and nickel metals from nickelcadmium battery and processing scrap material containing nickel, cadmium, iron and other non-metallic substances, said device comprising;
a furnace defining an interior chamber and having material inlet means for inserting said scrap material therein, gas inlet means, and gas outlet means;
means for injecting and maintaining a reducing gas atmosphere into said furnace chamber through said gas inlet means;
means for providing an oxygen getter in said furnace chamber to overlay said scrap material therein to prevent oxide formation;
means for controlling the temperature of said furnace chamber in sequential fashion to selectively off-gas free waters then molecular water and non-metallic substances, and-then cadmium vapour;
condenser means connected to said gas outlet means and including mould means for receiving condensed cadmium;
means for controlling the temperature of said condenser means to condense and then solidify into said mould means cadmium vapour received from said furnace chamber; and
means for receiving exhaust gas from said condenser means for filtering and collecting particulate ash therein.

20. The apparatus of Claim 19 or 20, further including means for receiving and cooling the filtered exhaust gas from said ash collection means.

21. The apparatus of Claim 20, wherein said reducing gas injection and maintaining means includes an argon gas source and means for metering said argon gas into said furnace chamber to create a reducing atmosphere within said chamber.

22. The apparatus of Claim 21, wherein said condenser means comprises a condenser tube integral with said furnace chamber and open to said gas outlet means, said condenser tube being adapted to receive vaporised cadmium from said furnace chamber.

23. The apparatus of Claim 22, wherein said container or mould means comprises removable cadmium metal mould members disposed in the bottom portion of said condenser tube.

24. The apparatus of any of Claims 18 to 23, wherein the means for control of the temperature of the furnace are capable of producing a temperature of from 150 to 1000°C within the furnace.

25. The apparatus of any one of Claims 18 to 24, wherein the means for control of the temperature of the condenser are capable of producing a temperature of from about 135 to about 400°C.

26. An apparatus as defined in any one of Claims 18 to 25 for perfomance of the process defined in any one of Claims 1 to 17.
